# EUROPEAN PATENT APPLICATION

(11) **EP 4 691 685 A1**
(43) Date of publication of application: **11.02.2026**
(21) Application number: 24783945.9
(22) Date of filing: 09.01.2024
(51) Int. Cl.: B23P 15/00

(54) **FORMING METHOD FOR BATTERY HOUSING STRUCTURE**

(30) Priority: 06.04.2023 CN 202310355405
(71) Applicant: Jiangsu RDF Precision Technology Co., Ltd., Changzhou, Jiangsu 213200 (CN)
(72) Inventor: WANG, Yousheng, hangzhou, Jiangsu 213200 (CN)
(74) Representative: Zoli, Filippo
(86) International application number: PCT/CN2024/071369
(87) International publication number: WO 2024/207860

(57) **Abstract**

The present application relates to the technical field of batteries. Disclosed is a forming method for a battery housing structure. The forming method comprises: providing a surface plate; forming four notch grooves on the surface plate, each notch groove having an outward-opening groove opening, and flanging the periphery of the surface plate outwards to form a turned edging; folding both ends of the surface plate outwards to form two housing side plates, and completely closing the notch grooves by means of welding to form weld seams; forming a U-shaped housing, and enclosing the turned edging to form a U-shaped cavity opening; and a top cover comprising a U-shaped cover plate, placing the cover plate in a housing cavity by means of the cavity opening, closing the cavity opening, and clamping the cover plate between the two housing side plates. By means of the four notch grooves formed on the surface plate, the turned edging is folded and the periphery of the housing is fully covered, the housing and the cover plate are bent and arranged in a U shape, and the cover plate directly seals and covers the cavity opening. Meanwhile, the turned edging plays a role in assembling and positioning, such that the whole assembly and connection are convenient, efficiency is high, and battery safety performance is improved.

## Description

### CROSS-REFERENCE TO RELATED APPLICATION

The present disclosure is filed on the basis of Chinese patent application No. CN202310355405.6, entitled "FORMING METHOD FOR BATTERY HOUSING STRUCTURE", filed April 6, 2023, and claims priority to the Chinese patent application, the entire contents of which are incorporated herein by reference.

### TECHNICAL FIELD

The present disclosure relates to the technical field of batteries, and specifically to a forming method for a battery housing structure.

### BACKGROUND

At present, with the increasing miniaturization, light weight, and portability of electronic products, such as video cameras, notebooks, and mobile phones, the driving power supply of these electronic products is also developing toward high capacity, high safety, and light weight. Batteries are widely used in electronic products because of their high capacity and other excellent performance.

A battery includes a housing, a top cover, battery cells, and the like. An accommodating cavity is provided in the housing. The battery cells are arranged in the accommodating cavity. Two terminals are provided on the top cover. The terminals are each electrically connected to the battery cells through a soft connecting sheet and can be connected to the outside.

### SUMMARY

### Technical Problem

In the existing technology, one or two top covers are generally provided on the housing, and in the process of assembling and connecting the top cover(s) to the housing, the connection operation is inconvenient and the assembly efficiency is low. In addition, the volume utilization rate of the housing is low.

### Technical Scheme

An objective of the present disclosure is to provide a forming method for a battery housing structure, to solve the problems of inconvenient operation and low assembly efficiency in the process of assembling the housing and the top cover in the existing technology.

The present disclosure provides a forming method for a battery housing structure, which includes:
step 1: providing a square flat plate, wherein two notch grooves running through the flat plate are formed on an edge of each of two sides of the flat plate, each of the notch grooves has a groove opening facing outward, the two notch grooves on each of the two sides of the flat plate are spaced apart from each other, the two notch grooves on one of the two sides of the flat plate are symmetrical to the two notch grooves on another of the two sides of the flat plate, a thickness of the flat plate is greater than or equal to 0.05 mm, and the flat plate is made of an aluminum plate or stainless steel;
step 2: folding a periphery of the flat plate outward to form a flange, wherein the flange is arranged around the entire periphery of the flat plate, the notch grooves are located on the flange and run through the flange, a folding angle is formed between the flange and the flat plate, the folding angle ranges from 0° to 150°,
   where the two notch grooves on one of the two sides of the flat plate are arranged respectively opposite to the two notch grooves on another of the two sides of the flat plate, a bending line across the flat plate is formed between every two notch grooves opposite to each other, and a height of the flange is greater than or equal to 0.5 mm;
step 3: respectively bending two ends of the flat plate outward along the bending lines to form two housing side plates spaced apart from and parallel to each other, wherein inner side walls of each of the notch grooves move toward each other during the outward bending of the two ends of the flat plate, and a gap is formed between the inner side walls when the bending is completed; completely closing the gaps by welding to form weld seams, wherein a housing bottom plate is connected between bottom portions of the two housing side plates, the two housing side plates and the housing bottom plate are arranged in a U-shaped configuration to form a U-shaped housing, an accommodating cavity for accommodating battery cells is defined by the housing, and a U-shaped cavity opening is defined by the flange; and
step 4: providing a top cover including a U-shaped cover plate, and placing the cover plate into the accommodating cavity through the cavity opening to close the cavity opening, wherein the flange abuts against a side wall of the cover plate; and fixing the housing to the cover plate by welding to form a battery housing structure.

Optionally, in the step 1, the flat plate is formed by stamping; and the notch grooves are formed on the flat plate by angled notching.

Optionally, each of the notch grooves is triangular, trapezoidal, or arc-shaped, and the two notch grooves arranged symmetrically on the two sides of the flat plate are of the same specification and shape.

Optionally, in the step 2, after the periphery of the flat plate is folded outward to form the flange, the flange is pressed and flattened to a thickness equal to or less than a thickness of the flat plate; and the notch grooves are formed on the flange, and a distance between a bottom of each of the notch grooves and the flat plate is greater than or equal to 0 mm.

Optionally, in the step 3, before the gaps are completely closed by welding, a bottom of each of the gaps has a wrinkle portion with folds, and the wrinkle portion is subjected to high-temperature treatment or pressing and flattening treatment to form a smooth rounded corner, and the rounded corner forms an angle of 0° to 150°.

Optionally, in the step 4, top portions of the two housing side plates are moved outward away from each other to expand the cavity opening outward before the cover plate is placed in the accommodating cavity through the cavity opening, and after the cover plate is placed in the accommodating cavity, the housing side plates spring back, the flange presses against an outer side wall of the cover plate from outside to inside, and the cover plate is held between the two housing side plates.

Optionally, the cover plate includes two cover side plates arranged side by side and spaced apart from each other and a cover top plate connected between top portions of the two cover side plates, and the two cover side plates and the cover top plate are arranged in a U-shaped configuration; and
in the step 4, after the battery housing structure is formed, the cover top plate and the housing bottom plate are arranged opposite to each other.

Optionally, the cover top plate is provided with two mounting holes, a terminal is mounted in each of the mounting holes, the two mounting holes are spaced apart from each other, the cover plate is provided with an explosion-proof hole, and an explosion-proof sheet is arranged in the explosion-proof hole.

Optionally, the cover plate is provided with an explosion-proof hole, and an explosion-proof sheet is mounted in the explosion-proof hole; each of the cover side plates is provided with a mounting hole, two mounting holes are respectively provided on the two cover side plates, a terminal is mounted in each of the mounting holes, and an annular gap exists between a middle portion of the terminal and an inner side wall of the corresponding mounting hole;
a sealing ring is arranged in the annular gap, an inner periphery of the sealing ring abuts against an outer periphery of the terminal and is held in the annular gap, an upper portion of the terminal extends to an outer side of the corresponding cover side plate to form an upper segment, a terminal block is sleeved over an outer periphery of the upper segment, and the terminal block is pressed against an upper plastic member; the upper plastic member is pressed against the corresponding cover side plate, an outer periphery of the upper plastic member extends upward to form an upper extension ring, a mounting area is defined by the upper extension ring, and the terminal block is mounted in the mounting area;
a lower portion of the terminal extends downward into the accommodating cavity to form a lower segment, an outer periphery of the lower segment expands outward to form a lower ring, a lower plastic member is arranged on an outer periphery of the lower ring, and the lower plastic member is arranged around the outer periphery of the terminal and abuts against a lower surface of the corresponding cover side plate from bottom to top;
the lower ring is spaced apart from the lower surface of the corresponding cover side plate by an insertion space, the lower plastic member extends toward the insertion space to form an insert ring, and the insert ring fills up the insertion space; and an upper surface of the corresponding cover side plate is provided with an annular groove which is recessed inward, the annular groove is arranged around and in communication with the corresponding mounting hole, and the upper plastic member is pressed against a bottom of the annular groove from top to bottom.

Optionally, each of the cover side plates includes an abutment edge abutting against the housing bottom plate, the lower plastic member includes a positioning column horizontally extending toward the abutment edge, an outer end of the positioning column expands outward to form a positioning ring, and an outer periphery of the positioning ring is provided with an elastic portion which is deformable under stress;
the housing bottom plate is provided with a positioning protrusion protruding toward the accommodating cavity, a positioning channel is provided in the positioning protrusion, the positioning channel runs through an outer end surface of the positioning protrusion to form a positioning opening, the positioning channel includes a main channel, a shrinkage channel, and an expansion channel, a front end of the main channel is in communication with the positioning opening, a rear end of the main channel shrinks inward to form the shrinkage channel, and a rear end of the shrinkage channel expands outward to form the expansion channel; and
in the step 4, in a process of the abutment edge moving toward the housing bottom plate, an outer end surface of the positioning ring abuts against an inner side wall of the main channel; as the abutment edge continues to move toward the housing bottom plate, the elastic portion deforms under compression; and as the abutment edge continues to move toward the housing bottom plate, the positioning ring is located in the expansion channel, and the elastic portion recovers and deforms outward, until the outer periphery of the positioning ring abuts against an inner side wall of the expansion channel, and the abutment edge abuts against the housing bottom plate.

### Beneficial effects

Compared with the existing technology, according to the forming method for a battery housing structure, through the arrangement of the four notch grooves on the flat plate, when the flat plate is bent, the flange can be bent through the opening space provided by the notch grooves to fully cover the periphery of the housing. In addition, the housing and the cover plate are respectively in a U-shaped configuration, the cover plate and the housing can be directly inserted into each other in a staggered manner, so that the cover plate directly covers the cavity opening. The flange provides a positioning effect during assembly. As such, the whole assembly and connection process is convenient and efficient, and the safety performance of the battery is improved.

### BRIEF DESCRIPTION OF DRAWINGS

FIG. 1 is a schematic top view of a flat plate in step 1 according to the present disclosure;
FIG. 2 is a schematic enlarged view of part A in FIG. 1 according to the present disclosure;
FIG. 3 is a schematic perspective view of the flat plate in step 2 according to the present disclosure;
FIG. 4 is a schematic enlarged view of part B in FIG. 3 according to the present disclosure;
FIG. 5 is a schematic perspective view of the flat plate in step 2 according to the present disclosure;
FIG. 6 is a schematic enlarged view of part C in FIG. 5 according to the present disclosure;
FIG. 7 is a schematic perspective view of a housing in step 3 according to the present disclosure;
FIG. 8 is a schematic enlarged view of part D in FIG. 7 according to the present disclosure;
FIG. 9 is a schematic perspective view of a cover plate in step 4 according to the present disclosure;
FIG. 10 is a schematic perspective view of a battery housing structure in step 4 according to the present disclosure;
FIG. 11 is a schematic sectional view of a terminal in the battery housing structure according to the present disclosure;
FIG. 12 is a partial schematic sectional view of the battery housing structure according to the present disclosure; and
FIG. 13 is a partial schematic sectional view of the battery housing structure according to the present disclosure.

In the drawings: flat plate 100, notch groove 101, flange 110, height H of flange, residual thickness L, folding angle 1100, weld seam 111, bending portion 112, rounded corner 113, housing 200, housing bottom plate 201, housing side plate 202, accommodating cavity 210, positioning protrusion 220, main channel 221, shrinkage channel 222, expansion channel 223, cover plate 300, cover top plate 301, cover side plate 302, mounting hole 310, annular groove 311, terminal 400, upper segment 401, lower ring 402, terminal block 410, upper plastic member 420, upper extension ring 421, sealing ring 430, lower plastic member 440, insert ring 441, positioning column 442, positioning ring 4420, explosion-proof sheet 500.

### DETAILED DESCRIPTION

To make the objectives, technical schemes, and advantages of the present disclosure clearer, the present disclosure is described in further detail with reference to accompanying drawings and embodiments. It should be understood that the specific embodiments described herein are merely used for explaining the present disclosure, and are not intended to limit the present disclosure.

The implementation of the present disclosure will be described in detail below through specific embodiments.

The same or similar reference numerals in the drawings of the embodiments are used to denote the same or similar parts. In the description of the present disclosure, it should be understood that the orientation or positional relationships indicated by the terms such as "on," "below," "left," and "right" are based on orientation or position relationships shown in the accompanying drawings, and are used only for ease and brevity of illustration and description, rather than indicating or implying that the mentioned apparatus or element must have a particular orientation or must be constructed and operated in a particular orientation. Therefore, the terms describing positional relationships in the drawings are for illustrative illustration only, and should not be construed as limiting of the present disclosure. For those having ordinary skills in the art, the specific meanings of the above terms can be understood according to specific circumstances.

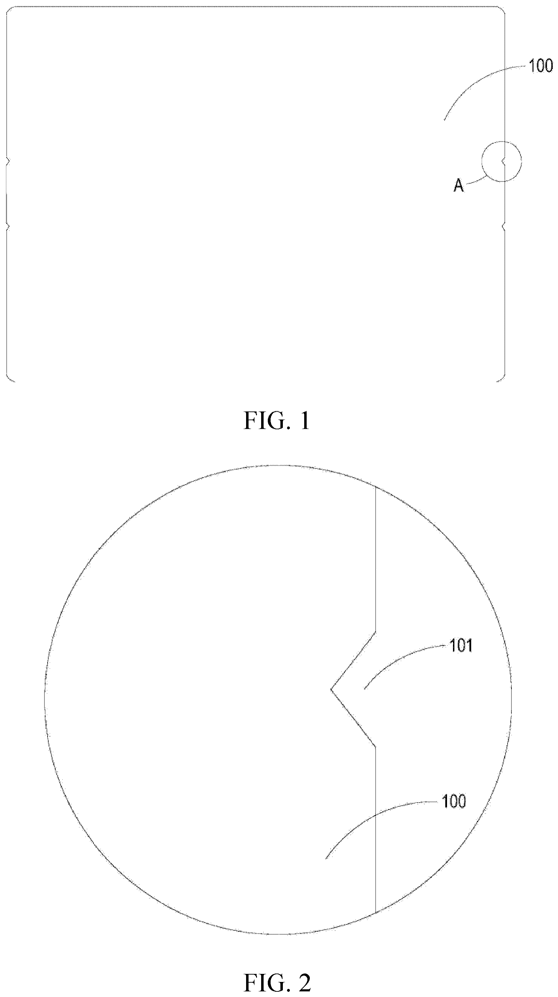

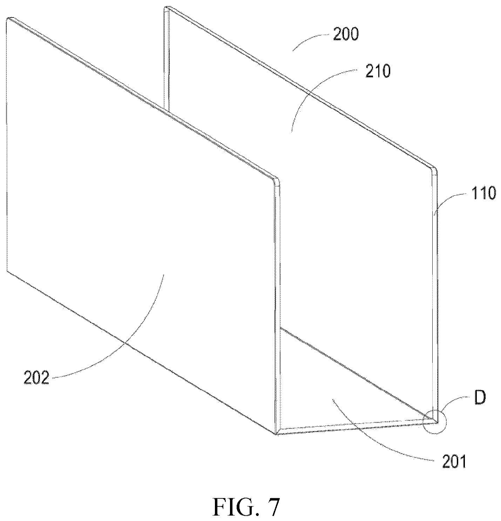

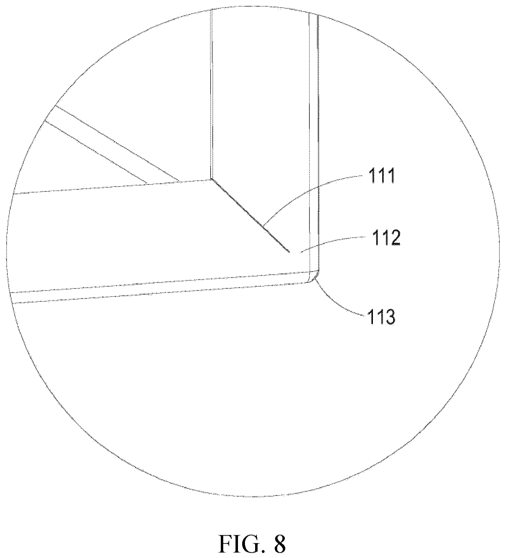

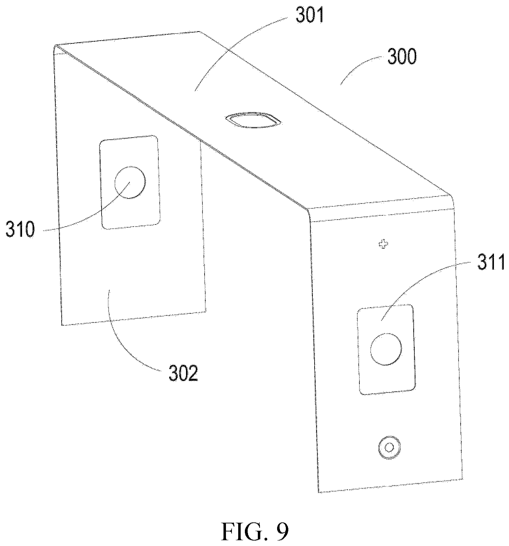

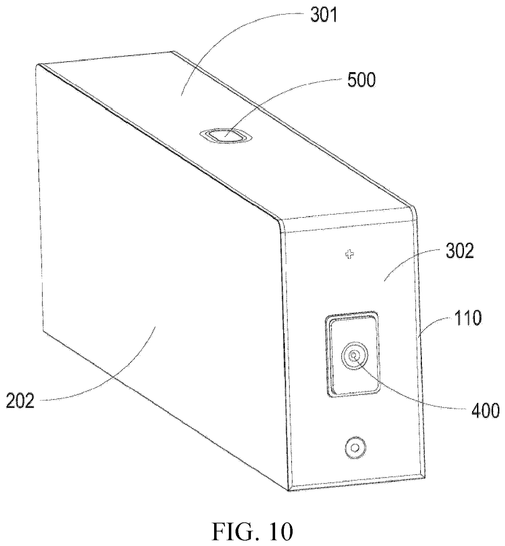

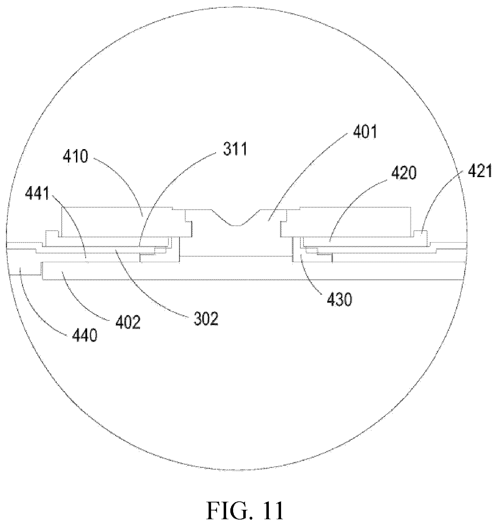

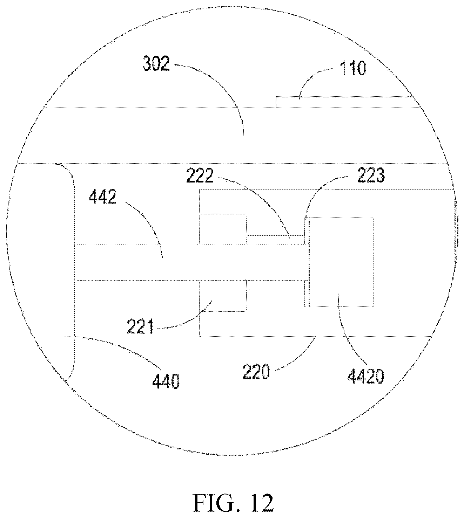

FIG. 1 to FIG. 13 show preferred embodiments of the present disclosure.

The present disclosure provides a forming method for a battery housing structure, which includes the following steps 1 to 4.

At step 1, a square flat plate 100 is provided. Two notch grooves 101 running through the flat plate 100 are formed on an edge of each of two sides of the flat plate 100. Each of the notch grooves 101 has a groove opening facing outward. The two notch grooves 101 on each of the two sides of the flat plate 100 are spaced apart from each other. The two notch grooves 101 on one of the two sides of the flat plate 100 are symmetrical to the two notch grooves 101 on another of the two sides of the flat plate 100. A thickness of the flat plate 100 is greater than or equal to 0.05 mm.

At step 2, a periphery of the flat plate 100 is folded outward to form a flange 110. The flange 110 is arranged around the entire periphery of the flat plate 100. The notch grooves 101 are located on the flange 110 and run through the flange 110. A folding angle 1100 is formed between the flange 110 and the flat plate 100. The folding angle 1100 ranges from 0° to 150°. The four notch grooves 101 are respectively arranged opposite to each other in pairs on the two sides of the flat plate 100. A bending line across the flat plate 100 is formed between every two notch grooves 101 opposite to each other. A height H of the flange 110 is greater than or equal to 0.5 mm. The flat plate is made of an aluminum plate or stainless steel.

At step 3, two ends of the flat plate 100 are respectively bent outward along the bending lines to form two housing side plates 202 spaced apart from and parallel to each other. Inner side walls of each of the notch grooves 101 moves toward each other during the outward bending of the two ends of the flat plate 100. A gap is formed between the inner side walls when the bending is completed. The gaps are completely closed by welding to form weld seams 111. A housing bottom plate 201 is connected between bottom portions of the two housing side plates 202. The two housing side plates 202 and the housing bottom plate 201 are arranged in a U-shaped configuration to form a U-shaped housing 200. An accommodating cavity 210 is defined by the housing 200. A U-shaped cavity opening is defined by the flange 110.

At step 4, a top cover including a U-shaped cover plate 300 is provided, and the cover plate 300 is placed into the accommodating cavity 210 through the cavity opening to close the cavity opening. The flange 110 abuts against a side wall of the cover plate 300. The housing 200 is fixed to the cover plate 300 by welding to form a battery housing structure.

According to the forming method for a battery housing structure, through the arrangement of the four notch grooves 101 on the flat plate 100, when the flat plate 100 is bent, the flange can be bent through the opening space provided by the notch grooves 101 to fully cover the periphery of the housing 200. In addition, the housing 200 and the cover plate 300 are respectively in a U-shaped configuration, the cover plate 300 and the housing 200 can be directly inserted into each other in a staggered manner, so that the cover plate 300 directly covers the cavity opening. The flange 110 provides a positioning effect during assembly. As such, the whole assembly and connection process is convenient and efficient, and the safety performance of the battery is improved.

If the periphery of the housing 200 is folded to form the flange after the housing 200 has been formed, the folding operation will be difficult at corners of the housing 200, or only part of the housing 200 is folded to form the flange, the sealing effect and the positioning effect during assembly will be unsatisfactory.

In the step 1, the flat plate 100 is formed by stamping; and the notch grooves 101 are formed on the flat plate 100 by angled notching. As such, the flat plate 100 is formed by blanking a sheet material or a coil material with a punch press or a hydraulic press.

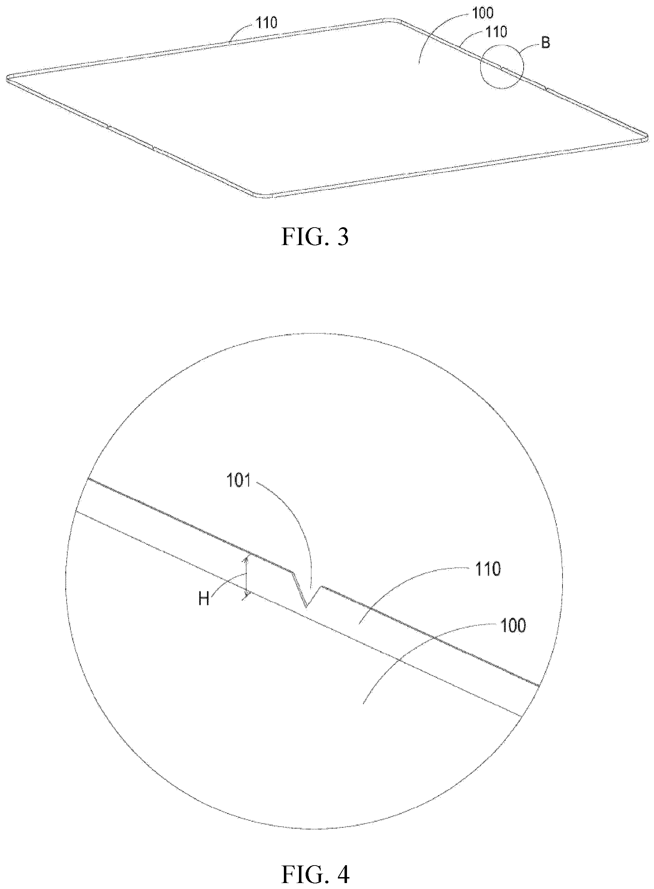

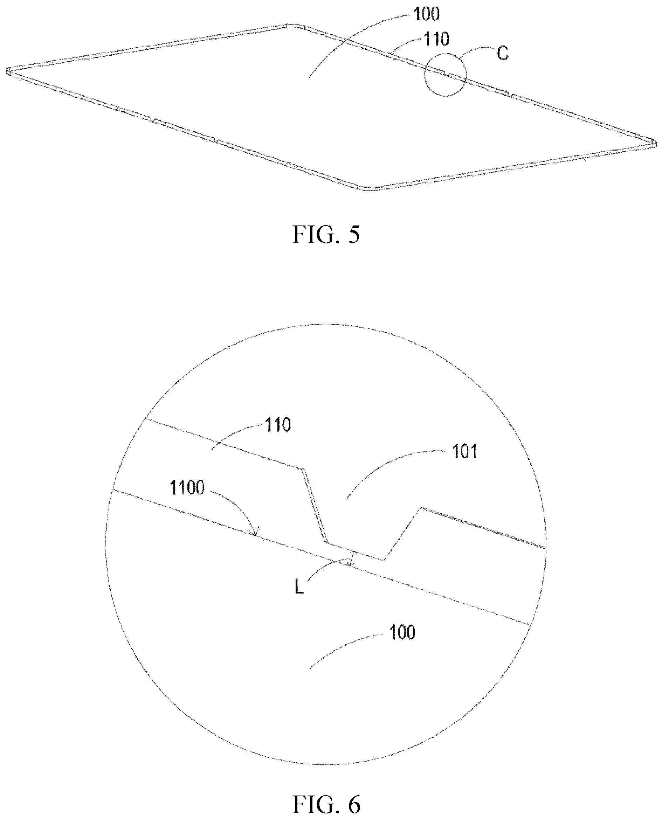

Each of the notch grooves 101 is triangular, trapezoidal, or arc-shaped. The two notch grooves 101 arranged symmetrically on the two sides of the flat plate 100 are of the same specification and shape. As such, the shape of the notch grooves 101 may be triangular as shown in FIG. 3 to FIG. 4, or may be trapezoidal or arc-shaped, as shown in FIG. 5 to FIG. 6.

In the step 2, after the periphery of the flat plate 100 is folded outward to form the flange 110, the flange 110 is pressed and flattened to a thickness equal to or less than a thickness of the flat plate 100. The notch grooves 101 are formed on the flange 110. Each of the notch grooves 101 has a groove opening facing upward. A distance between a bottom of each of the notch grooves 101 and the flat plate 100 is greater than or equal to 0 mm. In other words, a residual thickness L of the flange at the notch groove is greater than or equal to 0 mm. The pressing and flattening of the flange 110 can ensure its strength.

Preferably, in the step 3, before the gaps are completely closed by welding, a bottom of each of the gaps has a wrinkle portion with folds, the wrinkle portion is subjected to high-temperature treatment or pressing and flattening treatment to form a smooth rounded corner 113, and the rounded corner 113 forms an angle of 0° to 150°. Since wrinkles are formed at the bending position of the notch groove 101 after bending, a wrinkle portion with folds is formed at a bending portion 112. The wrinkle portion is smoothened by high-temperature treatment within a temperature range that the material can withstand, or by pressing and flattening.

In an embodiment, in the step 4, top portions of the two housing side plates 202 are moved outward away from each other to expand the cavity opening outward before the cover plate 300 is placed in the accommodating cavity 210 through the cavity opening, and after the cover plate 300 is placed in the accommodating cavity 210, the housing side plates 202 that have been moved outward spring back, the flange 110 presses against an outer side wall of the cover plate 300 from outside to inside, and the cover plate 300 is held between the two housing side plates 202. With the bend between the housing side plates 202 and the housing bottom plate 201 as a fulcrum, the two housing side plates 202 are swung outward away from each other, and then spring back.

Alternatively, the top portion of one housing side plate 202 may be moved outward to expand the cavity opening.

The cover plate 300 includes two cover side plates 302 arranged side by side and spaced apart from each other and a cover top plate 301 connected between top portions of the two cover side plates 302. The two cover side plates 302 and the cover top plate 301 are arranged in a U-shaped configuration.

In the step 4, after the battery housing structure is formed, the cover top plate 301 and the housing bottom plate 201 are arranged opposite to each other. As such, a stable structure is achieved. The accommodating cavity 210 is configured for accommodating battery cells to form a battery.

In an embodiment, the cover plate 300 is provided with an explosion-proof hole, and an explosion-proof sheet 500 is mounted in the explosion-proof hole. Each of the cover side plates 302 is provided with a mounting hole 310, two mounting holes 310 are respectively provided on the two cover side plates 302, a terminal 400 is mounted in each of the mounting holes 310, and an annular gap exists between a middle portion of the terminal 400 and an inner side wall of the corresponding mounting hole 310.

A sealing ring 430 is arranged in the annular gap. An inner periphery of the sealing ring 430 abuts against an outer periphery of the terminal 400 and is held in the annular gap. An upper portion of the terminal 400 extends to an outer side of the corresponding cover side plate 302 to form an upper segment 401. A terminal block 410 is sleeved over an outer periphery of the upper segment 401. The terminal block 410 is pressed against an upper plastic member 420. The upper plastic member 420 is pressed against the corresponding cover side plate 302. An outer periphery of the upper plastic member 420 extends upward to form an upper extension ring 421. A mounting area is defined by the upper extension ring 421. The terminal block 410 is mounted in the mounting area.

A lower portion of the terminal 400 extends downward into the accommodating cavity 210 to form a lower segment. An outer periphery of the lower segment expands outward to form a lower ring 402. A lower plastic member 440 is arranged on an outer periphery of the lower ring 402. The lower plastic member 440 is arranged around the outer periphery of the terminal 400 and abuts against a lower surface of the corresponding cover side plate 302 from bottom to top. As such, through the use of the upper segment 401 and the terminal block 410 for electrical connection to the outside and the skillful design of the positional relationship of the upper plastic member 420, the terminal 400, the sealing ring 430, and the lower plastic member 440, the following functions are realized. The design of holding the sealing ring 430 ensures the sealing performance and fixes the terminal 400 in the mounting hole 310. The arrangement of the lower plastic member 440 prevents the battery cells from directly contacting with the lower surface of the cover side plate 302 and thus being short circuited.

The lower ring 402 is spaced apart from the lower surface of the corresponding cover side plate 302 by an insertion space. The lower plastic member 440 extends toward the insertion space to form an insert ring 441. The insert ring 441 fills up the insertion space. This prevents the lower ring 402 from directly contacting with the lower surface of the cover side plate 302 and thus being short circuited.

An upper surface of the corresponding cover side plate 302 is provided with an annular groove 311 which is recessed inward. The annular groove 311 is arranged around and in communication with the corresponding mounting hole 310. The upper plastic member 420 is pressed against a bottom of the annular groove 311 from top to bottom. As such, through the arrangement of the annular groove 311, the mounting and positioning of the upper plastic member 420 are realized, and spatial movement of the upper plastic member 420 is limited, so that the torsional resistance of the terminal 400 is improved, and the overall sealing performance is ensured.

In an embodiment, each of the cover side plates 302 includes an abutment edge abutting against the housing bottom plate 201. The lower plastic member 440 includes a positioning column 442 horizontally extending toward the abutment edge. An outer end of the positioning column 442 expands outward to form a positioning ring 4420, and an outer periphery of the positioning ring 4420 is provided with an elastic portion which is deformable under stress.

The housing bottom plate 201 is provided with a positioning protrusion 220 protruding toward the accommodating cavity 210. A positioning channel is provided in the positioning protrusion 220, and the positioning channel runs through an outer end surface of the positioning protrusion 220 to form a positioning opening. The positioning channel includes a main channel 221, a shrinkage channel 222, and an expansion channel 223. A front end of the main channel 221 is in communication with the positioning opening, a rear end of the main channel 221 shrinks inward to form the shrinkage channel 222, and a rear end of the shrinkage channel 222 expands outward to form the expansion channel 223.

In the step 4, in a process of the abutment edge moving toward the housing bottom plate 201, an outer end surface of the positioning ring 4420 abuts against an inner side wall of the main channel 221. As the abutment edge continues to move toward the housing bottom plate 201, the elastic portion deforms under compression; and as the abutment edge continues to move toward the housing bottom plate 201, the positioning ring 4420 is located in the expansion channel 223, and the elastic portion recovers and deforms outward, until the outer periphery of the positioning ring 4420 abuts against an inner side wall of the expansion channel 223, and the abutment edge abuts against the housing bottom plate 201.

The engagement between the positioning column 442 and the positioning protrusion 220 provides a positioning effect during assembly. In addition, the compression deformation of the elastic portion in the shrinkage channel 222 and the restoration of the elastic portion in the expansion channel 223 cause the outer periphery of the positioning ring 4420 to abut against the inner side wall of the expansion channel 223 to prevent the positioning ring 4420 from detaching from the expansion channel 223, thereby enhancing the strength of connection between the housing 200 and the top cover, and ensuring the overall structural strength of the battery housing 200.

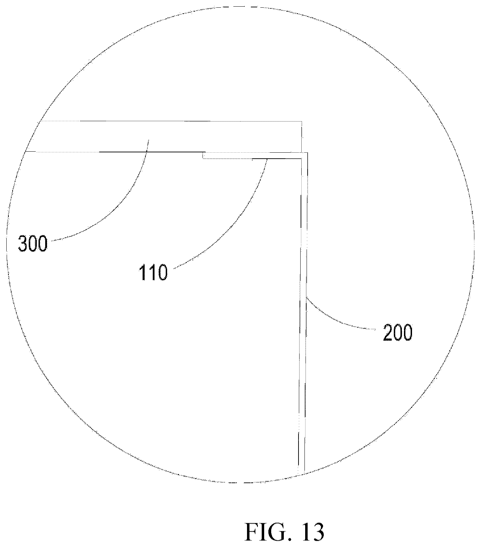

In an embodiment, referring to FIG. 13, the cover plate 300 covers the cavity opening, the flange 110 abuts against an inner side wall of the cover plate 300, and the housing 200 is held in the cover plate 300. As such, the whole assembly and connection process is convenient and efficient, and the safety performance of the battery is improved.

The foregoing descriptions are merely preferred embodiments of the present disclosure, but are not intended to limit the present disclosure. Any modification, equivalent replacement, or improvement made within the protection scope and principle of the present disclosure shall fall within the protection scope of the present disclosure.

## Claims

1. A forming method for a battery housing structure, comprising:
step 1: providing a square flat plate, wherein two notch grooves running through the flat plate are formed on an edge of each of two sides of the flat plate, each of the notch grooves has a groove opening facing outward, the two notch grooves on each of the two sides of the flat plate are spaced apart from each other, the two notch grooves on one of the two sides of the flat plate are symmetrical to the two notch grooves on another of the two sides of the flat plate, a thickness of the flat plate is greater than or equal to 0.05 mm, and the flat plate is made of an aluminum plate or stainless steel;
step 2: folding a periphery of the flat plate outward to form a flange, wherein the flange is arranged around the entire periphery of the flat plate, the notch grooves are located on the flange and run through the flange, a folding angle is formed between the flange and the flat plate, the folding angle ranges from 0° to 150°,
wherein the two notch grooves on one of the two sides of the flat plate are arranged respectively opposite to the two notch grooves on another of the two sides of the flat plate, a bending line across the flat plate is formed between every two notch grooves opposite to each other, and a height of the flange is greater than or equal to 0.5 mm;
step 3: respectively bending two ends of the flat plate outward along the bending lines to form two housing side plates spaced apart from and parallel to each other, wherein inner side walls of each of the notch grooves move toward each other during the outward bending of the two ends of the flat plate, and a gap is formed between the inner side walls when the bending is completed; completely closing the gaps by welding to form weld seams, wherein a housing bottom plate is connected between bottom portions of the two housing side plates, the two housing side plates and the housing bottom plate are arranged in a U-shaped configuration to form a U-shaped housing, an accommodating cavity for accommodating battery cells is defined by the housing, and a U-shaped cavity opening is defined by the flange; and
step 4: providing a top cover comprising a U-shaped cover plate, and placing the cover plate into the accommodating cavity through the cavity opening to close the cavity opening, wherein the flange abuts against a side wall of the cover plate, and the cover plate is made of an aluminum plate or stainless steel; and fixing the housing to the cover plate by welding to form a battery housing structure,
wherein in the step 4, top portions of the two housing side plates are moved outward away from each other to expand the cavity opening outward before the cover plate is placed in the accommodating cavity through the cavity opening, and after the cover plate is placed in the accommodating cavity, the housing side plates spring back, the flange abuts against an outer side wall of the cover plate from outside to inside, and the cover plate is held between the two housing side plates;
wherein the cover plate comprises two cover side plates arranged side by side and spaced apart from each other and a cover top plate connected between top portions of the two cover side plates, and the two cover side plates and the cover top plate are arranged in a U-shaped configuration;
wherein in the step 4, after the battery housing structure is formed, the cover top plate and the housing bottom plate are arranged opposite to each other;
wherein the cover plate is provided with an explosion-proof hole, and an explosion-proof sheet is mounted in the explosion-proof hole; wherein each of the cover side plates is provided with a mounting hole, two mounting holes are respectively provided on the two cover side plates, a terminal is mounted in each of the mounting holes, and an annular gap exists between a middle portion of the terminal and an inner side wall of the corresponding mounting hole;
wherein a sealing ring is arranged in the annular gap, an inner periphery of the sealing ring abuts against an outer periphery of the terminal and is held in the annular gap, an upper portion of the terminal extends to an outer side of the corresponding cover side plate to form an upper segment, a terminal block is sleeved over an outer periphery of the upper segment, and the terminal block is pressed against an upper plastic member; the upper plastic member is pressed against the corresponding cover side plate, an outer periphery of the upper plastic member extends upward to form an upper extension ring, a mounting area is defined by the upper extension ring, and the terminal block is mounted in the mounting area;
wherein a lower portion of the terminal extends downward into the accommodating cavity to form a lower segment, an outer periphery of the lower segment expands outward to form a lower ring, a lower plastic member is arranged on an outer periphery of the lower ring, and the lower plastic member is arranged around the outer periphery of the terminal and abuts against a lower surface of the corresponding cover side plate from bottom to top;
wherein the lower ring is spaced apart from the lower surface of the corresponding cover side plate by an insertion space, the lower plastic member extends toward the insertion space to form an insert ring, and the insert ring fills up the insertion space; an upper surface of the corresponding cover side plate is provided with an annular groove which is recessed inward, the annular groove is arranged around and in communication with the corresponding mounting hole, and the upper plastic member is pressed against a bottom of the annular groove from top to bottom;
wherein each of the cover side plates comprises an abutment edge abutting against the housing bottom plate, the lower plastic member comprises a positioning column horizontally extending toward the abutment edge, an outer end of the positioning column expands outward to form a positioning ring, and an outer periphery of the positioning ring is provided with an elastic portion which is deformable under stress;
wherein the housing bottom plate is provided with a positioning protrusion protruding toward the accommodating cavity, a positioning channel is provided in the positioning protrusion, the positioning channel runs through an outer end surface of the positioning protrusion to form a positioning opening, the positioning channel comprises a main channel, a shrinkage channel, and an expansion channel, a front end of the main channel is in communication with the positioning opening, a rear end of the main channel shrinks inward to form the shrinkage channel, and a rear end of the shrinkage channel expands outward to form the expansion channel; and
wherein in the step 4, in a process of the abutment edge moving toward the housing bottom plate, an outer end surface of the positioning ring abuts against an inner side wall of the main channel; as the abutment edge continues to move toward the housing bottom plate, the elastic portion deforms under compression; and as the abutment edge continues to move toward the housing bottom plate, the positioning ring is located in the expansion channel, and the elastic portion recovers and deforms outward, until the outer periphery of the positioning ring abuts against an inner side wall of the expansion channel, and the abutment edge abuts against the housing bottom plate.

2. The forming method for a battery housing structure of claim 1, wherein in the step 1, the flat plate is formed by stamping; and the notch grooves are formed on the flat plate by angled notching.

3. The forming method for a battery housing structure of claim 1, wherein each of the notch grooves is triangular, trapezoidal, or arc-shaped, and the two notch grooves arranged symmetrically on the two sides of the flat plate are of the same specification and shape.

4. The forming method for a battery housing structure of claim 3, wherein in the step 2, after the periphery of the flat plate is folded outward to form the flange, the flange is pressed and flattened to a thickness equal to or less than a thickness of the flat plate; and the notch grooves are formed on the flange, and a distance between a bottom of each of the notch grooves and the flat plate is greater than or equal to 0 mm.

5. The forming method for a battery housing structure of claim 1, wherein in the step 3, before the gaps are completely closed by welding, a bottom of each of the gaps has a wrinkle portion with folds, and the wrinkle portion is subjected to high-temperature treatment or pressing and flattening treatment to form a smooth rounded corner, and the rounded corner forms an angle of 0° to 150°.
